# DEMANDE DE BREVET EUROPEEN

(11) **EP 2 428 147 A1**
(43) Date de publication de la demande: **14.03.2012**
(21) Numéro de dépôt: 11306120.4
(22) Date de dépôt: 08.09.2011
(51) Int. Cl.: A47J 43/07

(54) **Appareil électroménager de préparation culinaire comportant un récipient de travail fermé par un couvercle amovible comprenant une goulotte**

(30) Priorité: 10.09.2010 FR 1057227
(71) Demandeur: SEB S.A., 69130 Ecully (FR)
(72) Inventeur: Martin, Philippe, 53240 Andouille (FR); Mancel, Arnaud, 53100 Mayenne (FR); Eveillard, Philippe, 53300 Saint-Fraimbault de Prieres (FR)
(74) Mandataire: Bourrières, Patrice

(57) **Abrégé**

Appareil électroménager de préparation culinaire comportant un récipient de travail (2; 102) et un couvercle (3; 103) amovible pouvant reposer sur le récipient de travail, le couvercle (3; 103) comprenant une goulotte (30; 130) pour l'introduction d'aliments dans le récipient de travail (2; 102) et devant être déplacé manuellement vers une position de fonctionnement pour autoriser le fonctionnement de l'appareil, caractérisé en ce que ladite goulotte (30; 130) reçoit une pièce de préhension (5; 105) fixée sur l'extrémité supérieure de la goulotte (30; 130), ladite pièce de préhension (5; 105) s'étendant radialement à l'extérieur de la goulotte (30; 130) et comportant un orifice (50, 150) au travers duquel est engagée l'extrémité supérieure de la goulotte.

## Description

La présente invention se rapporte au domaine technique général des appareils électroménagers de préparation culinaire comportant un récipient de travail fermé par un couvercle amovible comprenant une goulotte pour l'introduction des aliments et se rapporte plus particulièrement à un appareil électroménager dans lequel le couvercle doit être déplacé manuellement vers une position de fonctionnement pour autoriser le fonctionnement de l'appareil.

Il est connu, de la demande de brevet FR 10 54506 déposée par la demanderesse, un appareil de préparation culinaire comprenant un récipient de travail fermé par un couvercle amovible et un dispositif de verrouillage du couvercle en position de fonctionnement s'activant automatiquement lorsque le couvercle est fermé par un mouvement rectiligne en direction du récipient de travail.

Un tel appareil présente l'avantage de permettre un verrouillage automatique du couvercle en position de fonctionnement par un simple mouvement de translation du couvercle coaxialement au récipient de travail.

Cependant, sur un tel appareil, le couvercle ne comporte pas de zone spécifique pour exercer la pression verticale nécessaire à sa fermeture de sorte que l'utilisateur peut hésiter à exercer une pression franche sur le couvercle. De plus, certains utilisateurs sont naturellement tentés d'exercer cette pression sur l'extrémité supérieure de la goulotte avec le risque de percevoir cette manipulation inconfortable du fait de la faible surface d'appui que propose l'extrémité supérieure de la goulotte.

Aussi, un but de la présente invention est de remédier à ces inconvénients en proposant un appareil électroménager de préparation culinaire comportant un couvercle comprenant une zone de préhension spécifique procurant une plus grande ergonomie d'utilisation, notamment lors de l'opération de verrouillage du couvercle, et qui soit très visible de manière à être facilement identifiable par l'utilisateur tout en étant simple et économique à mettre en oeuvre.

A cet effet, l'invention se rapporte à un appareil électroménager de préparation culinaire comportant un récipient de travail et un couvercle amovible pouvant reposer sur le récipient de travail, le couvercle comprenant une goulotte pour l'introduction d'aliments dans le récipient de travail et devant être déplacé manuellement vers une position de fonctionnement pour autoriser le fonctionnement de l'appareil, caractérisé en ce que la goulotte reçoit une pièce de préhension fixée sur l'extrémité supérieure de la goulotte, la pièce de préhension s'étendant radialement à l'extérieur de la goulotte et comportant un orifice au travers duquel est engagée l'extrémité supérieure de la goulotte.

Une telle caractéristique permet d'offrir une zone de préhension parfaitement visible et très accessible à l'utilisateur, la pièce de préhension s'étendant exclusivement à l'extérieur de la goulotte afin de ne pas obstruer la goulotte.

Selon une autre caractéristique de l'invention, la pièce de préhension comporte une surface supérieure convexe.

Une telle caractéristique présente l'avantage de procurer un grand confort d'utilisation en offrant une surface supérieure épousant la courbure naturelle de la paume de la main.

Selon une autre caractéristique de l'invention, la pièce de préhension est fixée de manière amovible sur la goulotte.

Une telle caractéristique présente l'avantage de faciliter le nettoyage de l'appareil.

Selon une autre caractéristique de l'invention, la goulotte comporte un épaulement en bordure duquel vient reposer la pièce de préhension.

Selon encore une autre caractéristique de l'invention, la pièce de préhension comporte une paroi venant ceinturer la goulotte et présentant au moins localement une largeur supérieure à 1 cm.

Selon encore une autre caractéristique de l'invention, la paroi présente une plus grande largeur d'un côté de la goulotte que de l'autre côté.

Selon une autre caractéristique de l'invention, la pièce de préhension comporte un bord périphérique comprenant des empreintes.

Selon une autre caractéristique de l'invention, l'appareil comporte un dispositif de verrouillage du couvercle en position de fonctionnement actionné automatiquement lorsque le couvercle est fermé selon un mouvement de translation rectiligne en direction du récipient de travail.

On comprendra mieux les buts, aspects et avantages de la présente invention, d'après la description donnée ci-après de deux modes particuliers de réalisation de l'invention présentés à titre d'exemples non limitatifs, en se référant aux dessins annexés dans lesquels :
- la figure 1 est une vue en perspective d'un appareil électroménager de préparation culinaire selon un premier mode de réalisation de l'invention, le couvercle étant représenté en position ouverte,
- la figure 2 est une vue en perspective de l'appareil électroménager de la figure 1 avec le couvercle en position d'attente,
- la figure 3 est une vue semblable à la figure 2 avec le couvercle en position de fonctionnement,
- la figure 4 est une vue en perspective de l'appareil électroménager de la figure 1 avec la pièce de préhension démontée de la goulotte,
- la figure 5 est une vue en perspective du dessous de la pièce de préhension équipant le couvercle de l'appareil des figures 1 à 4,
- la figure 6 est une vue de côté de la pièce de préhension de la figure 5,
- la figure 7 est une vue en perspective d'un appareil selon un second mode de réalisation de l'invention, le couvercle étant représenté en position d'attente,
- la figure 8 est une vue semblable à la figure 7 avec le couvercle représenté en position de fonctionnement,
- la figure 9 est une vue en perspective de l'appareil de la figure 7 avec la pièce de préhension démontée de la goulotte.

Seuls les éléments nécessaires à la compréhension de l'invention ont été représentés. Pour faciliter la lecture des dessins, les mêmes éléments portent les mêmes références d'une figure à l'autre.

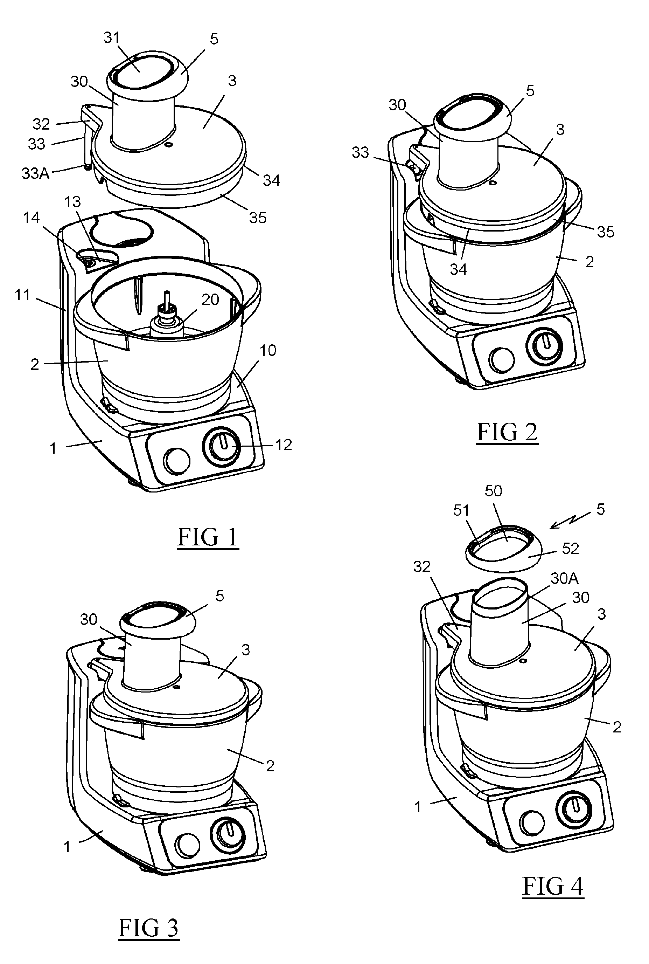

La figure 1 représente un appareil de préparation culinaire comportant un boîtier 1 comprenant un socle 10 supportant un récipient de travail 2 destiné à être fermé par un couvercle 3 amovible muni d'une goulotte 30 comprenant une extrémité supérieure munie d'un orifice 31 pour l'introduction d'aliments dans le récipient de travail 2.

Le boîtier 1 comporte un caisson 11 s'élevant verticalement en bordure du socle 10 et renferme, de manière connue en soi, un moteur, non représenté sur les figures, dont le fonctionnement est contrôlé au moyen d'un bouton de commande 12 disposé sur une face avant du boîtier 1, le moteur assurant l'entraînement en rotation d'un outil rotatif 20 disposé dans le récipient de travail 2.

Le caisson 11 comporte une face supérieure comprenant une échancrure 13 de forme générale triangulaire destinée à recevoir un bras 32 constitué par une excroissance radiale du couvercle 3, l'échancrure 13 comprenant une paroi de fond au niveau de laquelle débouche un palier 14 supporté par le caisson 11.

Le bras 32 du couvercle comporte une tige 33 prévue pour s'engager dans le palier 14 du boîtier, cette tige 33 s'étendant perpendiculairement à un plan de fermeture du couvercle 3 défini par un épaulement périphérique 34, le couvercle 3 comportant une jupe inférieure 35 venant s'introduire à l'intérieur du récipient de travail 2 lorsque l'épaulement périphérique 34 repose sur le bord supérieur du récipient de travail 2.

De cette manière, lorsque la tige 33 est engagée dans le palier 14, le couvercle 3 ne peut se déplacer librement que selon un mouvement de translation le long de l'axe longitudinal du palier 14 ou selon un mouvement de rotation autour de cet axe lorsque la jupe inférieure 35 n'est pas encore engagée à l'intérieur du récipient de travail 2.

De manière préférentielle, la tige 33 présente une extrémité inférieure arrondie facilitant l'introduction de la tige 33 dans le palier 14, cette extrémité arrondie étant surmontée d'une gorge 33A qui vient coopérer avec un dispositif de verrouillage intégré dans le boîtier 1.

Le dispositif de verrouillage, décrit plus en détail dans la demande de brevet FR 10 54506 déposée par la demanderesse, comporte des moyens de rappel du couvercle dans une position d'attente, illustrée à la figure 2, dans laquelle la jupe inférieure 35 du couvercle est très légèrement engagée dans l'ouverture du récipient de travail 2. Dans cette position d'attente, le couvercle 3 n'est pas verrouillé et peut donc être retiré du récipient de travail 2 en soulevant simplement le couvercle 3.

Pour immobiliser le couvercle 3 sur le récipient de travail 2, l'utilisateur doit exercer une pression verticale sur le couvercle 3 pour déplacer manuellement ce dernier vers une position fermée, illustrée sur la figure 3, dans laquelle l'épaulement périphérique 34 du couvercle 3 repose sur le bord supérieur du récipient de travail 2. Dans cette position fermée, le dispositif de verrouillage comporte un loquet coopérant automatiquement avec la gorge 33A de la tige 33 pour immobiliser verticalement cette dernière et empêcher le soulèvement du couvercle 3.

Plus particulièrement selon l'invention, cette manoeuvre de verrouillage du couvercle est rendue plus ergonomique par la présence d'une pièce de préhension 5 rapportée sur l'extrémité supérieure de la goulotte 30 du couvercle, cette pièce de préhension 5 comportant un orifice 50 oblong dont la forme correspondant à la forme extérieure de la goulotte 30.

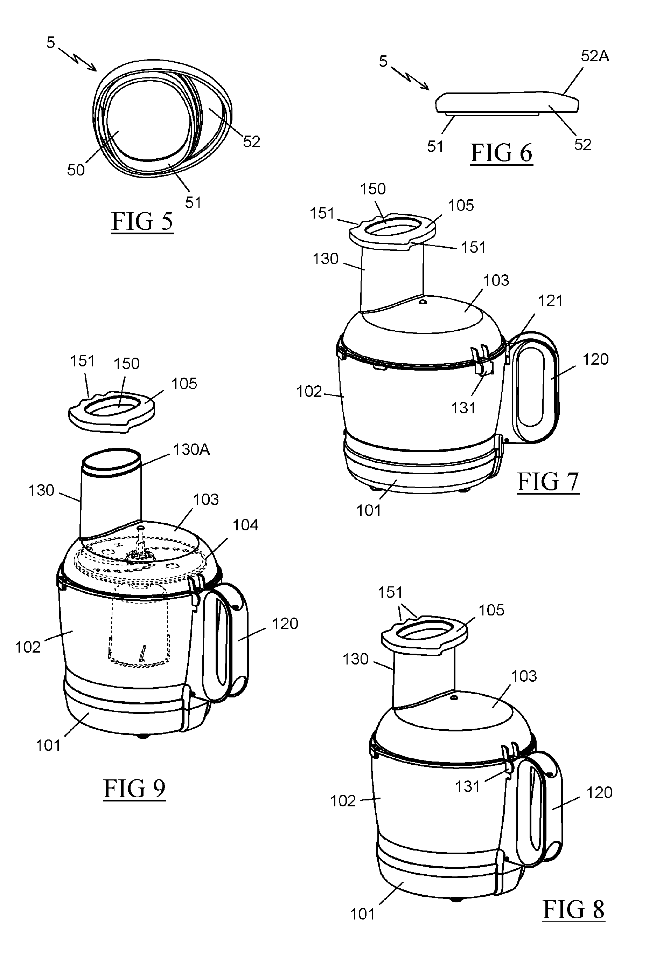

Conformément à la figure 5, l'orifice 50 de la pièce de préhension 5 est entouré d'une bride de fixation 51 qui s'engage autour de l'extrémité supérieure de la goulotte 30 et vient reposer sur un épaulement 30A de la goulotte 30, visible sur la figure 4, pour immobiliser verticalement la pièce de préhension 5 dans une position d'utilisation, illustrée sur les figures 1 à 3, dans laquelle la pièce de préhension 5 comporte une surface supérieure 52A qui dépasse légèrement de l'extrémité supérieure de la goulotte 30.

Comme on peut le voir sur la figure 6, cette surface supérieure 52A de la pièce de préhension 5 est avantageusement convexe et présente une courbure correspondant sensiblement à la courbure naturelle de la paume de la main afin d'offrir un plus grand confort à l'utilisateur lorsqu'il exerce une pression verticale sur le couvercle 3 par l'intermédiaire de la pièce de préhension 5.

De manière préférentielle, l'orifice 50 est excentré par rapport au centre de la pièce de préhension 5 de sorte que la surface supérieure est portée par une paroi 52 qui s'étend autour de la bride de fixation 51 en présentant une largeur plus importante d'un côté de la bride de fixation 51 que de l'autre côté. A titre d'exemple, la largeur de la paroi 52 d'un côté de l'orifice sera de l'ordre de 25 mm et de 8 mm de l'autre côté.

La pièce de préhension 5 ainsi réalisée présente l'avantage de posséder une paroi 52 constituant une surface d'appui confortable et bien visible sur laquelle la paume de la main peut aisément reposer pour effectuer l'opération de verrouillage du couvercle 3.

La pièce de préhension 5 sera préférentiellement montée de manière amovible sur la goulotte 30 afin de faciliter son nettoyage. Cependant, le diamètre de la bride de fixation 51 sera avantageusement choisi pour permettre un montage serré de la pièce de préhension 5 sur l'extrémité supérieure de la goulotte 30 de façon à ce que, bien qu'étant amovible, la pièce de préhension 5 puisse être également utilisée pour soulever le couvercle 3.

Dans une variante de réalisation, la pièce de préhension 5 pourra également être maintenue sur la goulotte 30 par des languettes élastiques.

Les figures 7 à 9 illustrent un second mode de réalisation de l'invention dans lequel l'appareil électroménager de préparation culinaire comporte un boîtier moteur 101 supportant un récipient de travail 102 fermé par un couvercle 103 venant se verrouiller par rotation sur le récipient de travail 102, le couvercle 103 comprenant une goulotte 130 débouchant à l'intérieur du récipient de travail 102 sur un disque de découpe 104, illustré en pointillé sur la figure 9, entraîné en rotation par un moteur, non représenté sur les figures.

Pour faire fonctionner cet appareil, l'utilisateur doit poser le couvercle 103 sur le récipient de travail 102 dans une position d'attente, illustrée sur la figure 7, dans laquelle un ergot 131 latéral porté par le couvercle 103 est décalé par rapport à une poignée 120 du récipient du travail, puis doit amener le couvercle 103 dans une position de fonctionnement, illustrée sur la figure 8, dans laquelle l'ergot 131 s'engage dans une fente latérale 121 de la poignée pour actionner un dispositif de sécurité autorisant le fonctionnement du moteur.

Un tel dispositif de sécurité est par exemple décrit plus en détail dans la demande de brevet FR-A1-2 926 969 déposée par la demanderesse.

Conformément à l'invention, pour faciliter l'opération de fermeture du couvercle 103 vers la position de fonctionnement, le couvercle 103 comporte une pièce de préhension 105 rapportée sur l'extrémité supérieure de la goulotte 130 du couvercle. Cette pièce de préhension 105 comporte un orifice 150 oblong qui s'engage autour de l'extrémité supérieure de la goulotte 130 et vient reposer sur un épaulement 130A de la goulotte, visible sur la figure 9, pour immobiliser verticalement la pièce de préhension 105 dans une position d'utilisation, illustrée sur les figures 7 et 8, dans laquelle la pièce de préhension 105 comporte une surface supérieure convexe qui dépasse légèrement de l'extrémité supérieure de la goulotte 130.

De manière préférentielle, la pièce de préhension 105 comporte un bord périphérique comprenant des empreintes 151 adaptées pour recevoir les doigts de la main et favoriser l'agrippement de la main lorsque l'utilisateur cherche à tourner le couvercle 103 vers la position de fonctionnement. Ces empreintes 151 participent également à améliorer le confort lors de cette opération.

Dans les deux exemples de réalisation illustrés précédemment, la pièce de préhension présente l'avantage d'être rapportée sur la goulotte ce qui lui permet d'être fabriquée indépendamment du couvercle et de pouvoir présenter une forme relativement complexe.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, la pièce de préhension pourra être fixée de manière non amovible sur la goulotte en étant par exemple collée ou emmanchée en force.

## Revendications

1. Appareil électroménager de préparation culinaire comportant un récipient de travail (2; 102) et un couvercle (3; 103) amovible pouvant reposer sur le récipient de travail, le couvercle (3; 103) comprenant une goulotte (30; 130) pour l'introduction d'aliments dans le récipient de travail (2; 102) et devant être déplacé manuellement vers une position de fonctionnement pour autoriser le fonctionnement de l'appareil, **caractérisé en ce que** ladite goulotte (30; 130) reçoit une pièce de préhension (5; 105) fixée sur l'extrémité supérieure de la goulotte (30; 130), ladite pièce de préhension (5; 105) s'étendant radialement à l'extérieur de la goulotte (30; 130) et comportant un orifice (50, 150) au travers duquel est engagée l'extrémité supérieure de la goulotte.

2. Appareil électroménager de préparation culinaire selon la revendication 1, **caractérisé en ce que** la pièce de préhension (5; 105) comporte une surface supérieure (52A) convexe.

3. Appareil électroménager de préparation culinaire selon l'une quelconque des revendications 1 à 2, **caractérisé en ce que** ladite pièce de préhension (5; 105) est fixée de manière amovible sur la goulotte (30; 130).

4. Appareil électroménager de préparation culinaire selon la revendication 3, **caractérisé en ce que** la goulotte (30; 130) comporte un épaulement (30A; 130A) en bordure duquel vient reposer la pièce de préhension.

5. Appareil électroménager de préparation culinaire selon l'une quelconque des revendications 1 à 4, **caractérisé en ce que** la pièce de préhension (5) comporte une paroi (52) venant ceinturer la goulotte (30) et présentant au moins localement une largeur supérieure à 1 cm.

6. Appareil électroménager de préparation culinaire selon la revendication 5, **caractérisé en ce que** la paroi (52) présente une plus grande largeur d'un côté de la goulotte (30) que de l'autre côté.

7. Appareil électroménager de préparation culinaire selon l'une quelconque des revendications 1 à 6, **caractérisé en ce que** la pièce de préhension (105) comporte un bord périphérique comprenant des empreintes (151).

8. Appareil électroménager de préparation culinaire selon l'une quelconque des revendications 1 à 7, **caractérisé en ce qu'**il comporte un dispositif de verrouillage du couvercle (3) en position de fonctionnement actionné automatiquement lorsque le couvercle (3) est fermé selon un mouvement de translation rectiligne en direction du récipient de travail (2).
